# FASCICULE DE BREVET EUROPEEN

(11) **EP 2 763 834 B1**
(45) Date de publication et mention de la délivrance du brevet: **02.05.2018**
(21) Numéro de dépôt: 12766691.5
(22) Date de dépôt: 02.10.2012
(51) Int. Cl.: B29D 11/00, G04B 3/04, G04B 15/14, G04B 29/02, G04B 31/016, B29C 45/16, G04B 39/00, G04B 45/00

(54) **PROCEDE DE FONCTIONNALISATION MECANIQUE OU/ET OPTIQUE D'UN COMPOSANT TRANSPARENT D'HORLOGERIE**
VERFAHREN ZUR MECHANISCHEN UND/ODER OPTISCHEN FUNKTIONALISIERUNG EINER DURCHSICHTIGEN UHRENKOMPONENTE
METHOD FOR MECHANICAL AND/OR OPTICAL FUNCTIONALIZATION OF A TRANSPARENT CLOCK COMPONENT

(30) Priorité: 04.10.2011 EP 11183804
(43) Date de publication de la demande: 13.08.2014
(73) Titulaire: ETA SA Manufacture Horlogère Suisse, 2540 Grenchen (CH)
(72) Inventeur: POFFET, Christian, CH-1735 Giffers (CH); GAECHTER, Philipp, CH-4452 Itingen (CH)
(74) Mandataire: Giraud, Eric
(86) Numéro de dépôt international: PCT/EP2012/069471
(87) Numéro de publication internationale: WO 2013/050372

(56) Documents cités:
- EP-A1- 1 666 225
- DE-A1- 2 318 395
- DE-A1- 19 540 333
- FR-A1- 2 360 113
- JP-A- 11 223 680
- JP-A- 58 080 587
- JP-A- 61 239 189
- US-A- 2 663 910
- US-A1- 2010 167 045
- US-A1- 2010 310 839
- US-B1- 6 342 019

## Description

### Domaine de l'invention

L'invention concerne un procédé de formage d'un composant d'horlogerie transparent, monobloc comportant une surface supérieure et une surface inférieure reliées par un bord, ledit bord s'étendant selon l'épaisseur dudit composant.

### Arrière-plan de l'invention

La substitution de composants transparents d'origine minérale par des composants transparents en matière plastique moulés permet de disposer d'une alternative fonctionnelle à bas coût de production, et toute indépendance de certaines sources d'approvisionnement de matériaux transparents de haut de gamme.

Toutefois, les pièces transparentes moulées sont, d'une part relativement épaisses car il est délicat de mouler des pièces très fines dans une qualité convenable et reproductible. D'autre part, la résistance à l'usure, et particulièrement aux rayures, de ces composants en plastique connus, est très médiocre. Leur utilisation pour des composants d'habillage d'une pièce d'horlogerie, carrure, lunette, ou glace, est donc limitée dans le temps.

Cette faible résistance à l'usure empêche, encore, de réaliser des composants avec des angles vifs, qui s'émousseraient trop vite dans le temps au contact de l'utilisateur, de ses vêtements, et des objets de son cadre de vie habituel.

Il est utile, en horlogerie, de disposer de composants de haute dureté superficielle, en particulier pour ces composants d'habillage externe, soumis aux contraintes de l'environnement et de l'utilisateur. De tels composants doivent, encore, posséder certaines propriétés physiques d'élasticité, de rigidité ou au contraire de souplesse, ou encore des propriétés optiques particulières, pour la mise en valeur de certains affichages ou composants, ou au contraire pour cacher certains organes de la pièce d'horlogerie.

Le document EP 1666 225 au nom de BAYER MATERIAL SCIENCE CLC décrit un procédé de fabrication d'un composant plastique moulé dans une première chambre, et revêtu dans une deuxième cavité du moule, dans laquelle le matériau de couverture est comprimé.

Le document JP 58 080587 A au nom de SUWA SEIKOSHA décrit l'amélioration de boîtes de montres, en terme de résistance et de précision dimensionnelle, par l'utilisation de fibre de verre traitée avec du silane acrylique et mélangée avec une résine synthétique durcissant aux UV, telle que résine spirane, avec un agent amorceur de la photo-polymérisation tel que benzophénone. Ces boîtes sont moulées dans des moules en caoutchouc synthétique élastique ou silicone, qui sont fixés à des plaques de verre puis irradiés par des UV pendant 30 secondes à 30 minutes selon l'intensité du rayonnement.

On connaît encore les documents : JP 11 223 680 A SEIKO EPSON, FR 2 360 113 A1 MULTIBREV, US 2 663 910 A DANIELSON ELMER, DE 195 40 333 A1 FRANZ WEIGELT, US 6 342 019 B1 BOEHM HERBERT, US 2010/310839 A1 REY CEA, DE 23 18 395 A1 UEBELHOFER, US 2010/167045 A1 SHULTES, relatifs à des problématiques similaires.

### Résumé de l'invention

L'invention se propose de mettre en oeuvre un procédé permettant l'obtention économique, avec une haute précision dimensionnelle, de composants d'horlogerie transparents et monobloc.

Tout particulièrement, l'invention a pour but de réaliser un tel composant, avec une dureté superficielle supérieure à celle des composants d'horlogerie usuellement obtenus par moulage de matériaux plastiques.

Un but particulier est encore de réaliser des composants externes à une pièce d'horlogerie, comportant des angles vifs, par exemple avec une taille à facettes ou une taille diamant, et résistants à l'usure.

A cet effet, l'invention concerne un procédé de fabrication et de fonctionnalisation mécanique ou/et optique d'un composant d'horlogerie transparent optiquement et comportant une surface supérieure et une surface inférieure reliées par un bord, ledit bord s'étendant selon l'épaisseur dudit composant, selon la revendication 1.

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée sous forme d'un organigramme, la succession des opérations de mise en oeuvre du procédé ;
- la figure 2 représente, de façon schématisée et en coupe selon son épaisseur, un composant obtenu selon le procédé, dans une réalisation où une couche est déposée sur un corps de base ;
- la figure 3 représente, de façon schématisée et en coupe selon son épaisseur et sensiblement perpendiculairement à ses surfaces principales, le composant de la figure 2 avec un de ses outillages de réalisation dans leur configuration pendant le formage du composant ;
- la figure 4 représente, de façon similaire à la figure 2, une variante où le composant comporte deux couches en superposition d'un corps de base ;
- la figure 5 représente, de façon similaire à la figure 2, une autre variante où une surface intermédiaire entre le corps de base et une couche de recouvrement est sensiblement lisse, et où l'épaisseur de cette couche de recouvrement est sensiblement constante ;
- la figure 6 représente, de façon similaire à la figure 2, une autre variante où une surface intermédiaire entre le corps de base et une couche de recouvrement est striée ;
- la figure 7 représente, de façon similaire à la figure 2, une autre variante où une surface intermédiaire entre le corps de base et une couche de recouvrement comporte une alternance de tenons et de mortaises ;
- la figure 8 représente, de façon similaire à la figure 2, une autre variante où une surface intermédiaire entre le corps de base et une couche de recouvrement est localement ondulée, et où la couche de recouvrement est d'épaisseur variable ;
- la figure 9 représente une coupe au voisinage de la surface supérieure d'un composant réalisé selon une variante particulière de l'invention ;
- la figure 10 représente, sous la forme d'un schéma-blocs, une pièce d'horlogerie comportant au moins un composant réalisé selon l'invention.

### Description détaillée des modes de réalisation préférés

L'invention se propose de mettre en oeuvre un procédé permettant l'obtention économique, avec une haute précision dimensionnelle, de composants 1 d'horlogerie transparents et monobloc.

Tout particulièrement, l'invention a pour but de réaliser un tel composant 1, avec une dureté superficielle supérieure à celle des composants d'horlogerie usuellement obtenus par moulage de matériaux plastiques.

L'invention consiste à recouvrir un corps de base 16, de préférence transparent, d'une ou plusieurs couches 20, 20A,..., présentant une bonne affinité avec ce corps de base 16 pour celles directement en contact avec ce corps de base, et présentant une bonne affinité entre elles pour celles qui sont juxtaposées. Le choix d'un premier matériau 5 adéquat pour le corps de base16, et d'un second matériau 6 adéquat pour chacune des couches 20 recouvrant ce corps de base ou se recouvrant entre elles, totalement ou partiellement, est donc d'une grande importance.

De préférence, on choisit un premier matériau 5 transparent optiquement parmi la famille des polymères acryliques ou le « Cover Form ®» de « Evonik Röhm ® » ou le « Nanocryl® » de « Hanse Chemie® » ou un polymétacrylate de méthyle.

Selon l'invention, on choisit au moins un second matériau de moulage 6 polymérisable pour la réalisation dudit composant 1, parmi la famille des polymères acryliques ou le « Cover Form ® » de « Evonik Röhm ® » ou le « Nanocryl® » de « Hanse Chemie® ».

Une étape essentielle consiste dans le choix du second matériau 6 de moulage.

De façon générale, ce second matériau 6 comporte des monomères acryliques, au moins un amorceur thermique, au moins un amorceur UV, au moins un réticulant qui peut être constitués par au moins un des monomères acryliques. Il peut encore comporter un ou plusieurs additifs, qui seront détaillés plus loin.

De façon plus particulière, ce second matériau 6 comporte un mélange de monomères acryliques comportant au moins un monomère dont la fonctionnalité est supérieure ou égale à 2, au moins un amorceur thermique, et au moins un amorceur photochimique. Là encore, il peut comporter un ou plusieurs additifs.

De façon encore plus particulière, ce second matériau 6 comporte, en proportion du total :
- un mélange de monomères acryliques dont la fonctionnalité est supérieure ou égale à 2 : 50-97.5%
- au moins un amorceur thermique : 0.5-3%
- au moins un amorceur photochimique. 0.5-3%
- au moins un additif:0-50%

Dans une composition encore plus particulière, ce second matériau 6 comporte, en proportion du total :
- un mélange de trimethylolpropane tri (méthacrylate) et de pentaerythrityl tetraacrylate : 50-97.5%
- bis (4-tert-butylcyclohexyl) peroxydicarbonate : 0.5-1.5%
- 1-benzoylcyclohexanol : 0.7-2.3%
- au moins un additif:0-50%

Dans une composition préférée, qu'on appellera dans la suite de l'exposé la composition-type CT du second matériau 6, ce second matériau 6 comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol : 2.0%
En ce qui concerne celles des compositions du second matériau 6 qui comportent des additifs, lesquels sont dans une plage de 0-50% du total de ce second matériau 6, ces additifs peuvent comporter, en pourcentage du total de ce second matériau:
a. Antistatiques :
   a. Copolymère polyamide-polyéther : 0-15% préférentiellement de 10-15%
   b. Résine ionomère éthylénique : 0-30% préférentiellement de 10-30%
   c. Trineoalkoxy Zirconate : 0-30% préférentiellement de 10-30%
b. Conducteurs :
   a. Nanoparticules conductrices : or, nanotubes de carbone, argent, alliage oxyde d'antimoine et d'étain, alliage oxyde d'aluminium et de zinc, alliage oxyde d'indium et d'étain, alliage oxyde de gallium et de zinc: 0-30% préférentiellement de 10-30%
c. Magnétiques :
   a. Nanoparticules magnétiques : magnétite : 0-30% préférentiellement de 5-30%
d. Antibactériens
   a. Ions argent : 0-30% préférentiellement de 10-30%
e. Anti-UV :
   a. Absorbeurs : benzotriazole : 0-0.2% préférentiellement de 0.05-0.2%
   b. HALS (Hindered Amine Light Stabilizers) :0-0.2% préférentiellement de 0.05-0.2%
f. Antioxydants :
   a.Phosphite phénolique ; éthylène bis [3,3-bis (3-tert-butyl-4-hydroxyphenyl) butyrate] ; pentaerythritol tetrakis (3-(3,5-di-tert-butyl-4-hydroxyphenyl) propionate) : 0-1.5%
g. Ignifugeants :
   a. Dérivé du phosphore : triphenyl phosphate 0-15%
   b. Montmorillonite exfoliée : 0-15%
   c. Nanotubes d'argiles : 0-15%
h. Lubrifiants :
   a.Silicone acrylate : 0-2% préférentiellement de 0.5-2%
i. Colorants :
   a.Anthraquinoniques : 0-50%
   b.Azoïques : 0-50%
j. Pigments : 0-50%
k. Adjuvant à « relargage » contrôlé : incorporés dans la formulation, ces adjuvants sont progressivement libérés dans le milieu d'utilisation : 0-50%
l. Microcapsules d'agent réparateur, constituées de liquide polymérisable de même nature que la composition concernée, en particulier dans une composition-type CT, sa teneur étant alors intégrée dans la teneur totale : 0-50%

On notera que le premier matériau 5 pour la constitution du corps de base 16 peut être choisi identique au second matériau 6, en particulier selon la composition-type CT ci-dessus.

L'invention concerne ainsi la mise au point d'un procédé de fabrication et de fonctionnalisation mécanique ou/et optique d'un composant d'horlogerie 1 transparent, comportant des surfaces supérieure 2 et inférieure 3, reliées par un bord 4, le bord 4 s'étendant selon l'épaisseur du composant 1. Ce procédé comporte les étapes suivantes :
- AA : on choisit un premier matériau 5 transparent optiquement, pour la réalisation d'un corps de base 16, parmi la famille des polymères acryliques ou selon la composition-type CT ou le « Cover Form ® » de « Evonik Röhm ® » ou le « Nanocryl® » de « Hanse Chemie® » ou un polymétacrylate de méthyle;
- BB : on choisit au moins un second matériau de moulage 6 polymérisable pour la réalisation d'une ou plusieurs couches 20 du composant 1, parmi la famille des polymères acryliques ou selon la composition-type CT ou le « Cover Form ® » de « Evonik Röhm ® » ou le « Nanocryl® » de « Hanse Chemie® »;
- CC : on effectue un formage d'un corps de base 16 du composant 1, dans le premier matériau 5, le corps de base 16 étant de volume inférieur à celui du composant 1 et s'étendant entre la surface inférieure 3 et une surface intermédiaire 7 reliées par un bord intermédiaire 8, et on effectue une structuration de fonctionnalisation mécanique ou/et optique de la surface intermédiaire 7, soit lors du formage du corps de base 16 dans un moule adapté, soit en reprise d'usinage après le formage ;
- DD : on définit un nombre de couches 20 à superposer au corps de base 16 pour obtenir un composant 1 ;
- EE : on réalise, pour chaque couche, un moule 9 dont une surface de contact 10 est, ou bien le négatif de la surface supérieure 2, ou bien une surface délimitant un solide de volume inférieur au volume final du composant 1, le moule 9 comportant un rebord 11 comportant une surface d'appui 12 agencée pour coopérer de façon complémentaire en appui sur la surface intermédiaire 7 ou sur le bord intermédiaire 8, et, en cas de pluralité de moules 9, ceux-ci définissent chacun le volume extérieur d'un corps intermédiaire 6A délimité par une surface intermédiaire 7A complémentaire de la surface de contact 10 du moule 9 concerné, les volumes intermédiaires 6A étant inclus les uns dans les autres;
- FF : on positionne, à une distance de la surface intermédiaire 7 correspondant à l'épaisseur requise pour le composant 1, et exactement positionné par rapport à la surface intermédiaire 7, le moule 9 avec sa surface de contact 10 faisant face à la surface intermédiaire 7 du corps de base 16, avec la surface d'appui 12 en contact étanche avec la surface intermédiaire 7 ou avec le bord intermédiaire 8;
- GG : on injecte le second matériau de moulage 6, de façon à remplir entièrement du second matériau de moulage 6 une cavité 14 délimitée par la surface de contact 10 du moule 9, la surface intermédiaire 7 du corps de base 16, et le rebord 11 en appui étanche par sa surface d'appui 12 sur la surface intermédiaire 7 ou sur le bord intermédiaire 8;
- HH : on laisse se polymériser le second matériau 6 injecté dans la cavité 14 jusqu'à sa polymérisation, pour obtenir, selon le cas, ou bien un composant 1, ou bien un corps intermédiaire 6A délimité par une surface intermédiaire 7A complémentaire de la surface de contact 10 du moule transparent 9;
- JJ : on éloigne le moule 9 ;
   - on renouvelle l'opération avec à chaque fois un nouveau moule 9 dont le volume intérieur est supérieur au volume du corps intermédiaire 6A obtenu par le moule précédent, jusqu'à obtention du composant 1 dans son volume final.
Dans une variante préférée de mise en oeuvre :
- on forme un corps de base 16 en polymétacrylate de méthyle (PMMA), comportant ladite surface inférieure 3 et une surface intermédiaire 7 fonctionnalisée mécaniquement ou/et optiquement ;
- on le recouvre d'au moins une couche 20 réalisée par injection d'un second matériau 6 transparent et polymérisable selon la composition-type CT ou en matériau «Cover Form ® », dans une cavité 14 entre un moule 9 et ledit corps de base 16 ou un corps intermédiaire 6A délimité par une surface intermédiaire 7A complémentaire d'une surface de contact 10 d'un moule 9 précédent, le dernier moule 9 étant le négatif de ladite surface supérieure 2 ;
- on y polymérise le second matériau 6 pour l'obtention d'un composant 1 rigide résultant de l'agglomération du corps de base 16 et de la ou des couches 20 successives;
- on détache le composant 1 des plaques et du moule 9 réalisé souple, par déformation de ce dernier.
On améliore la dureté par une insolation du composant 1 à des rayons ultra-violets. La mise en oeuvre préférée de l'invention comporte cette insolation UV, qui permet à l'amorceur photochimique de s'activer afin de réagir ; à défaut, les propriétés mécaniques du composant 1 fini sont moins bonnes.
On choisit de préférence le second matériau 6, ou bien dans la composition-type CT où ce second matériau 6 comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol :2.0%,
ou bien on choisit le matériau « Cover Form ® » de « Evonik Röhm ® » comme second matériau de moulage 6 polymérisable pour la réalisation du composant 1, pour la réalisation de la couche 20 ou des couches 20 du composant 1. Ce matériau est issu de la combinaison de deux composants : un réactif liquide de référence « 30A » et un amorceur liquide de référence « 30B ».

Et on choisit de préférence un polymétacrylate de méthyle comme premier matériau 5.

En effet, le matériau selon la composition-type CT ou le matériau « Cover Form ® » possède, une fois polymérisé, et en particulier après un traitement de chauffe KK à une température inférieure à 130°C, voisine de 110°C, et plus encore après un traitement d'insolation LL aux rayons ultra-violets, dits ci-après UV, effectué après une telle chauffe, une excellente dureté superficielle, qui le rend apte à apporter une excellente résistance aux rayures, aux chocs, et à l'abrasion. L'insolation LL aux rayons ultra-violets a pour effet d'augmenter la durée superficielle du composant 1 obtenu, en effectuant la réticulation définitive du système.

De plus, lors de sa mise en oeuvre, ce produit, qui est le résultat d'un mélange de phases liquides, base et activateur, possède, dans sa phase liquide une très bonne mouillabilité qui lui permet d'occuper toutes les porosités, fentes, et de façon générale tous les creux et reliefs superficiels d'un corps de base avec lequel il est mis en contact. Son emploi comme couche 20 de couverture permet donc de cacher tous les défauts du composant ou sous-composant, corps de base 16 ou corps intermédiaire 6A sur lequel on l'applique.

On réalise de préférence chaque moule 9 souple dans un matériau « PDMS® », qui permet une très grande précision dimensionnelle, et un état de surface parfait.

De façon préférée, pour obtenir une dureté améliorée du corps intermédiaire 6A ou du composant 1 rigide, on soumet le second matériau 6 injecté dans la cavité 14, pendant sa polymérisation, à une température inférieure à 130°C, de préférence comprise entre 100°C et 120°C, pendant 10 à 20 secondes. Cette chauffe est de préférence effectuée alors que le composant ou le sous-composant est encore dans la cavité 14.

Dans une variante avantageuse, on réalise un refroidissement à température ambiante au moins aussi brusque que la chauffe, pendant une durée inférieure à 20 secondes.

Pour obtenir une dureté améliorée du corps intermédiaire 6A ou du composant 1 rigide, après injection du second matériau de moulage 6, on insole le corps intermédiaire 6A ou le composant 1 par un rayonnement ultra-violet, ou bien au travers du moule 9 réalisé sous forme d'un moule transparent aux rayons ultra-violets, ou bien après extraction du corps intermédiaire 6A ou du composant 1 polymérisé de la cavité 14.

On choisit avantageusement le premier matériau de moulage 5 transparent aux rayons ultra-violets, ce qui permet alors d'insoler le corps intermédiaire 6A ou le composant 1 par un rayonnement ultra-violet au travers du corps de base 16, en plus de l'insolation au travers du moule transparent 9, pour obtenir une dureté améliorée du corps intermédiaire 6A ou du composant 1 rigide.

On applique de préférence une force de serrage sur le moule 9 et sur le corps de base 16 pendant l'injection du second matériau de moulage 6 dans la cavité 14, et pendant la polymérisation du second matériau de moulage 6 pour la réalisation du composant 1.

On effectue de préférence l'injection du premier matériau de moulage 5 à haute pression, c'est-à-dire avec une pression supérieure à 100 MPa, tout en restant inférieure à 150 MPa.

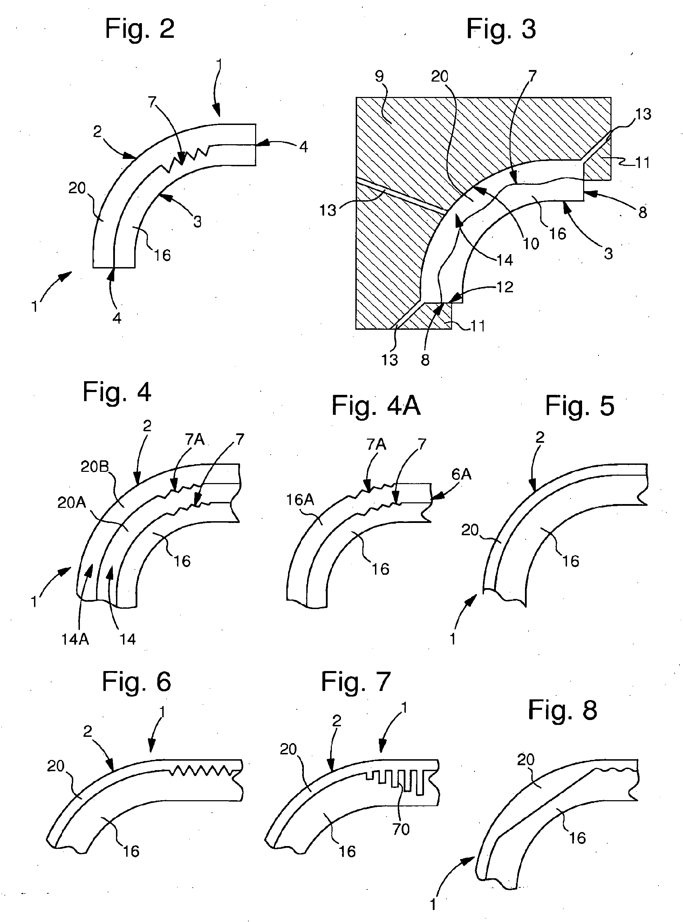

La figure 4 illustre une réalisation à plusieurs couches 20: une première couche 20A recouvre directement, totalement ou partiellement, un corps de base 16 pour former avec elle un corps intermédiaire 6A, tel que visible sur la figure 4A, et cette première couche 20A est elle-même recouverte, totalement ou partiellement, par une deuxième couche périphérique 20B. On comprend qu'il est possible de réalisé un composé avec un nombre de couches supérieur, sans s'éloigner de l'invention.

Si l'invention a pour but préféré la réalisation de composés transparents, elle permet aussi de réaliser des composés avec des inclusions à caractère décoratif, ou technique, par exemple les repères d'affichage de repères horaires, qui peuvent être réalisés dans l'épaisseur d'une glace de montre, ou bien du côté de cette glace tourné vers l'aiguillage ou les moyens d'affichage de la pièce d'horlogerie, ou des repères de plages correspondant à des affichages particuliers, comme la réserve de marche ou similaire.

Dans le cas où la forme du composant 1 est tourmentée, on réalise dans au moins un tel moule 9 un réseau capillaire 13 d'injection et de dégazage, et on injecte le second matériau de moulage 6 au travers du réseau capillaire d'injection 13 dans le moule transparent 9 concerné, de façon à remplir entièrement du second matériau de moulage 6 une telle cavité 14 délimitée par la surface de contact 10 du moule transparent 9, la surface intermédiaire 7 du corps de base 16, et le rebord 11 en appui étanche par sa surface d'appui 12 sur la surface intermédiaire 7 ou sur le bord intermédiaire 8.

De façon à donner des propriétés physiques ou/et optiques particulières au composant 1, on réalise une structuration de fonctionnalisation. Dans la variante de la figure 6, on réalise une structuration de fonctionnalisation optique de la surface intermédiaire 7 par la réalisation de secteurs striés faisant diffuseur anisotrope optique.

Dans la variante de la figure 7, on réalise une structuration de fonctionnalisation mécanique de la surface intermédiaire 7 par la réalisation de tenons 18 ou/et mortaises 17 sensiblement parallèles entre eux et sensiblement perpendiculaires à un plan tangent à la surface inférieure 3 ou à la surface intermédiaire 7 au niveau de l'intersection entre le prolongement des tenons ou mortaises avec la surface concernée.

Dans la variante de la figure 8, on réalise une structuration de fonctionnalisation mécanique de la surface intermédiaire 7 par la réalisation de sections plus fortes du corps de base 16 dans ses zones de forte courbure que dans ses zones de moindre courbure, et on réalise des sections de couches 20 d'apport de sections plus fortes dans ses zones de forte courbure que dans ses zones de moindre courbure.

On réalise une structuration de fonctionnalisation mécanique de la surface intermédiaire 7 par la réalisation de zones d'épaisseur variable du composant 1 dans ses zones de moindre courbure.

Le choix du matériau selon la composition-type CT ou du matériau « Cover Form ® » permet le dépôt de couches 20 minces. De préférence, on recouvre le corps de base 16, pour parvenir au composant 1, avec une épaisseur cumulée de la ou des couches 20 dans le second matériau comprise entre 10 et 50 microns.

Avantageusement, quand on réalise un composé multi-couches, on effectue une structuration de fonctionnalisation de plusieurs des surfaces intermédiaires entre ces couches, tel que visible sur la figure 4, où les surfaces intermédiaires 7 et 7A sont ainsi structurées.

Dans une application particulière, on structure au moins une couche 20 particulière parmi celle ou celles recouvrant le corps de base 16, et au moins une surface intermédiaire 7, de façon à cacher ou à révéler la couche particulière, selon l'angle d'incidence optique d'observation du composant 1 par un utilisateur.

Plus particulièrement, la couche particulière, un matériau holographique, subit au préalable l'enregistrement d'un hologramme à l'aide d'une source lumineuse cohérente. Dans une application particulière de l'invention on choisit un laser HeNe ou une diode laser, de puissance de 1 à 4 mW.

Une variante particulièrement intéressante d'inclusion à caractère technique pour les composants 1 destinés à faire partie d'un mouvement horloger consiste à ménager des poches ou des alvéoles quand on effectue la structuration de fonctionnalisation mécanique de la surface intermédiaire 7, comme par exemple les mortaises 70 de la figure 7, de façon à pouvoir y déposer des particules de propriétés particulières avant l'application de la couche supérieure. Les propriétés du matériau selon la composition-type CT ou du matériau « Cover Form ® » à l'état liquide avant sa polymérisation permettent de jouer sur sa capillarité, lorsqu'il est mélangé avec de telles particules, pour les déposer au fond de telles mortaises ou similaire. Un dimensionnement très serré de ces mortaises, stries, alvéoles, poches ou similaires, et voisin de la granulométrie des particules, permet de retenir des particules de faible granulométrie pendant l'injection du produit liquide destiné à former la couche suivante, dans une position parfaitement définie.

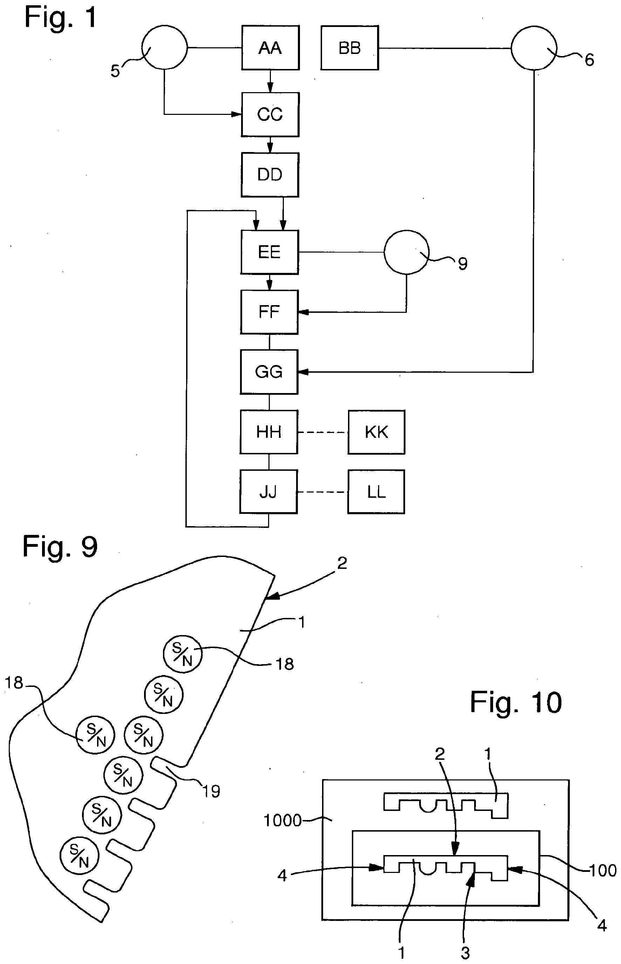

Tout particulièrement, le choix de l'insertion de particules électrisées ou électrisables, ou/et aimantées ou aimantables, permet de conférer au composant 1 ainsi réalisé des propriétés physiques particulières d'attraction ou/et de répulsion avec d'autres composants d'un mouvement d'horlogerie, de propriétés complémentaires selon l'effet recherché. La figure 9 illustre ainsi une réalisation particulière, dans laquelle on insère dans la cavité 17 formant moule, soit avant l'injection du premier matériau de moulage 5, soit pendant ou après cette injection, des nodules 18 comportant chacun un noyau électrisable ou/et magnétisable ou/et électrisé ou/et magnétisé, notamment de type électrets, ferrites, aimants néodyme, ou similaires. L'électrisation ou l'aimantation peut être préalable ou postérieure à l'injection. La figure 6 illustre par exemple des particules aimantées après la polymérisation complète du premier matériau de moulage 5, notamment du matériau selon la composition-type CT ou du matériau «Cover Form ®». Cette figure 6 illustre aussi, dans une zone de la surface supérieure 2, des alvéoles 19 agencées pour la lubrification. La surface de contact 7 de la plaque 6 est alors aménagée en conséquence.

La fonctionnalisation de la surface peut, encore, être effectuée par un procédé de nano-structuration de surface, tel que photolithographie, lithographie par faisceau d'électrons, croissance induite par faisceau d'électrons. Cette structuration est intéressante pour le cryptage et les marquages anti-contrefaçon. Dans une autre variante, un matériau lubrifiant est mélangé au premier matériau de moulage 5, de façon analogue aux nodules 18 ci-dessus.

L'invention concerne encore l'application de ce procédé pour la confection d'un composant d'horlogerie 1 choisi parmi : glace, couronne, carrure, platine, pont, roue, roue d'échappement, ancre, logement de palier, amortisseur anti-choc, cette liste n'étant nullement limitative.

Le choix d'une couche mince 20 en matériau selon la composition-type CT ou en matériau «Cover Form ®» sur un corps de base 16 en PMMA garantit une première réaction physico-chimique de diffusion au niveau de l'interface à la surface intermédiaire 7. La mise en oeuvre du produit «Cover Form ®», qui est un bi-composant mélangé en phase liquide permet d'occuper toutes les porosités, tant de la surface intermédiaire 7, que du moule. Ceci explique à la fois les états de surface parfaits obtenus, bien entendu dans la limite de la qualité des moules utilisés, que la transparence du composant 1 obtenu : en l'absence de colorant, la surface de joint est invisible, et il est impossible de déceler à l'oeil nu la limite entre les différents matériaux. Le «Cover Form ®» se prête à la coloration, ce qui autorise la fabrication de composants présentant des décors particuliers, y compris multicolores et dans leur épaisseur. La réalisation d'hologrammes est également possible.

L'invention permet d'obtenir des composants d'une grande transparence, d'une dureté superficielle supérieure à celle des matières plastiques moulées usuelles, de dureté durable. Le comportement aux rayures est très bon. En utilisant comme premier matériau de moulage 5 du «Cover Form ®», avec une chauffe inférieure à 130°C et un durcissement UV, on obtient une dureté, qui, classée sur l'échelle des mines graphites d'écriture est au niveau 7H, à comparer avec une dureté 2H d'un PMMA standard ayant reçu un traitement anti-rayures, ou encore avec une dureté HB d'un polyamide.

On comprend que le procédé décrit en détail ci-dessus est un exemple représentatif d'une famille de procédés que l'utilisateur met en oeuvre en fonction des moyens de production qu'il utilise.

En particulier, dans un procédé automatisé, on peut avantageusement :
- fermer l'outil de façon à définir un premier volume de chambre ;
- y injecter le premier matériau 5 ;
- le faire refroidir ;
- rouvrir partiellement le moule, de façon à créer une deuxième chambre de volume supérieur à celui du premier volume, la différence entre ces volumes correspondant au volume d'une première couche 20A de second matériau 6 ;
- injecter ce second matériau 6 ;
- procéder à une chauffe de durcissement ;
- procéder à une insolation UV de durcissement complémentaire ;
- refroidir le composé ;
- renouveler l'opération autant de fois qu'il y a de couches à superposer avec le même profil de moule.

On peut bien sûr au cours du processus changer de contre-moule afin de modifier la géométrie du composant réalisé.

La facilité de mise en oeuvre du procédé selon l'invention permet aussi, sur un même composant de délimiter des zones recouvertes de second matériau 6, et d'autres qui en sont dépourvues, de façon, selon les matériaux choisis, à faciliter la mise en oeuvre d'autres procédés tels que soudage laser ou ultra-sons, ou similaires, qui peuvent être réalisés dans une meilleure qualité sur certains matériaux.

Enfin, le cycle de production selon l'invention, est extrêmement rapide : pour la fabrication d'un composant avec une couche unique de revêtement, le nombre d'opérations à réaliser au niveau du poste d'injection est de 4, à comparer aux 14 opérations nécessaires pour la réalisation d'un composant similaire dans un matériau classique recouvert d'un revêtement anti-rayures.

## Revendications

1. Procédé de fabrication et de fonctionnalisation mécanique ou/et optique d'un composant d'horlogerie (1) transparent optiquement et comportant une surface supérieure (2) et une surface inférieure (3) reliées par un bord (4), ledit bord (4) s'étendant selon l'épaisseur dudit composant (1), **caractérisé en ce que** :
- on choisit un premier matériau (5) qui est un matériau transparent optiquement et qui est un polymère acrylique ou un polymétacrylate de méthyle;
- on choisit au moins un second matériau de moulage (6) polymérisable pour la réalisation d'au moins une couche (20) dudit composant (1),
dans une composition-type (CT) où ledit second matériau (6) comporte, en proportion du total :
- trimethylolpropane tri (méthacrylate) : 78.0 %
- pentaerythrityl tetraacrylate : 19.5%
- bis (4-tert-butylcyclohexyl) peroxydicarbonate : 0.5%
- 1-benzoylcyclohexanol : 2.0%,
- on effectue un formage d'un corps de base (16) dudit composant (1), dans ledit premier matériau (5), ledit corps de base (16) de volume inférieur à celui dudit composant (1) et s'étendant entre ladite surface inférieure (3) et une surface intermédiaire (7) reliées par un bord intermédiaire (8), et on effectue une structuration de fonctionnalisation mécanique ou/et optique de ladite surface intermédiaire (7), soit lors du formage dudit corps de base (16) dans un moule adapté, soit en reprise d'usinage après ledit formage ;
- on définit un nombre de couches (20) à superposer audit corps de base (16) pour obtenir un dit composant (1) ;
- on réalise, pour chaque dite couche (20), un moule (9) dont une surface de contact (10) est, ou bien le négatif de ladite surface supérieure (2), ou bien une surface délimitant un solide de volume inférieur au volume final dudit composant (1), ledit moule (9) comportant un rebord (11) comportant une surface d'appui (12) agencée pour coopérer de façon complémentaire en appui sur ladite surface intermédiaire (7) ou sur ledit bord intermédiaire (8), et, en cas de pluralité de dits moules (9), ceux-ci définissent chacun le volume extérieur d'un corps intermédiaire (6A) délimité par une surface intermédiaire (7A) complémentaire de ladite surface de contact (10) dudit moule (9) concerné, lesdits volumes intermédiaires (6A) étant inclus les uns dans les autres;
- on positionne, à une distance de ladite surface intermédiaire (7) correspondant à l'épaisseur requise pour ledit composant (1), et exactement positionné par rapport à ladite surface intermédiaire (7), ledit moule (9) avec sa dite surface de contact (10) faisant face à ladite surface intermédiaire (7) dudit corps de base (16), avec ladite surface d'appui (12) en contact étanche avec ladite surface intermédiaire (7) ou avec ledit bord intermédiaire (8);
- on injecte ledit second matériau de moulage (6), de façon à remplir entièrement dudit second matériau de moulage (6) une cavité (14) délimitée par ladite surface de contact (10) dudit moule (9), ladite surface intermédiaire (7) dudit corps de base (16), et ledit rebord (11) en appui étanche par sa dite surface d'appui (12) sur ladite surface intermédiaire (7) ou sur ledit bord intermédiaire (8);
- on laisse se polymériser ledit second matériau (6) injecté dans ladite cavité (14) jusqu'à sa polymérisation, pour obtenir, selon le cas, ou bien un dit composant (1) constitué par l'assemblage dudit corps de base (16) avec au moins ladite couche (20), ou bien un corps intermédiaire (16A) délimité par une surface intermédiaire (7A) complémentaire de ladite surface de contact (10) dudit moule (9);
- on éloigne ledit moule (9) ;
- on renouvelle l'opération de formation d'une couche (20) avec à chaque fois un nouveau moule (9) dont le volume intérieur est supérieur au volume dudit corps intermédiaire (16A) obtenu par ledit moule précédent, jusqu'à obtention dudit composant (1) dans son volume final,
et **caractérisé en ce qu'**on réalise une structuration de fonctionnalisation optique de ladite surface intermédiaire (7) par la réalisation de secteurs striés faisant diffuseur anisotrope optique.

2. Procédé selon la revendication 1, **caractérisé en ce qu'**on choisit un polymétacrylate de méthyle comme dit premier matériau (5).

3. Procédé selon l'une des revendications précédentes, **caractérisé en ce qu'**on soumet ledit second matériau (6) injecté dans ladite cavité (14), pendant sa polymérisation, à une température comprise entre 100°C et 120°C, pendant 10 à 20 secondes.

4. Procédé selon l'une des revendications précédentes, **caractérisé en ce que**, après injection dudit second matériau de moulage (6), on insole ledit corps intermédiaire (6A) ou ledit composant (1) par un rayonnement ultra-violet, ou bien au travers dudit moule (9) réalisé sous forme d'un moule transparent aux rayons ultra-violets, ou bien après extraction dudit corps intermédiaire (6A) ou dudit composant (1) polymérisé de ladite cavité (14), pour obtenir une dureté améliorée dudit corps intermédiaire (16A) ou dudit composant (1) rigide.

5. Procédé selon la revendication précédente, **caractérisé en ce qu'**on choisit ledit premier matériau de moulage (5) transparent aux rayons ultra-violets, et **en ce qu'**on insole ledit corps intermédiaire (6A) ou ledit composant (1) par un rayonnement ultra-violet au travers dudit corps de base (16), en plus d'une dite insolation au travers d'un dit moule transparent (9), pour obtenir une dureté améliorée dudit corps intermédiaire (16A) ou dudit composant (1) rigide.

6. Procédé selon l'une des revendications précédentes, **caractérisé en ce qu'**on applique une force de serrage sur ledit moule (9) et sur ledit corps de base (16) pendant l'injection dudit second matériau de moulage (6) dans ladite cavité (14), et pendant la polymérisation dudit second matériau de moulage (6) pour la réalisation dudit composant (1).

7. Procédé selon l'une des revendications précédentes, **caractérisé en ce qu'**on réalise ledit composant (1) avec ladite surface supérieure (2) plane, et qu'on réalise choisit ledit moule (9) transparent aux rayons ultra-violets avec au moins sa dite surface de contact (10) plane.

8. Procédé selon l'une des revendications précédentes, **caractérisé en ce qu'**on réalise dans au moins un dit moule (9) un réseau capillaire (13) d'injection et de dégazage, et on injecte ledit second matériau de moulage (6) au travers dudit réseau capillaire d'injection (13) dans le dit moule (9) concerné, de façon à remplir entièrement dudit second matériau de moulage (6) une cavité (14) délimitée par ladite surface de contact (10) dudit moule (9), ladite surface intermédiaire (7) dudit corps de base (16), et ledit rebord (11) en appui étanche par sa dite surface d'appui (12) sur ladite surface intermédiaire (7) ou sur ledit bord intermédiaire (8).

9. Procédé selon l'une des revendications précédentes, **caractérisé en ce qu'**on effectue l'injection dudit premier matériau de moulage (5) à une pression supérieure à 100 MPa.

10. Procédé selon l'une des revendications précédentes, **caractérisé en ce qu'**on réalise une structuration de fonctionnalisation mécanique de ladite surface intermédiaire (7) par la réalisation de tenons (18) ou/et mortaises (70) sensiblement parallèles entre eux et sensiblement perpendiculaires à un plan tangent à ladite surface inférieure (3) ou à ladite surface intermédiaire (7) au niveau de l'intersection entre le prolongement desdits tenons ou mortaises avec la surface concernée.

11. Procédé selon l'une des revendications précédentes, **caractérisé en ce qu'**on réalise une structuration de fonctionnalisation mécanique de ladite surface intermédiaire (7) par la réalisation de sections plus faibles dudit corps de base (16) dans ses zones de forte courbure que dans ses zones de moindre courbure, et on réalise des sections de couches (20) d'apport de sections plus fortes dans ses zones de forte courbure que dans ses zones de moindre courbure.

12. Procédé selon l'une des revendications précédentes, **caractérisé en ce qu'**on réalise une structuration de fonctionnalisation mécanique de ladite surface intermédiaire (7) par la réalisation de zones d'épaisseur variable dudit composant (1) dans ses zones de moindre courbure.

13. Procédé selon l'une des revendications précédentes, **caractérisé en ce qu'**on réalise une structuration de fonctionnalisation mécanique d'au moins une dite surface intermédiaire (7) pour ménager un relief avec des creux de dimension voisine de la granulométrie de particules électrisées ou électrisables, ou/et aimantées ou aimantables, qu'on y dépose mélangées avec dudit second matériau (6) à l'état liquide, avant l'application d'une couche supérieure en dit second matériau (6).

14. Procédé selon l'une des revendications précédentes, **caractérisé en ce qu'**on recouvre ledit corps de base (16), pour parvenir audit composant (1), avec une épaisseur cumulée de second matériau (6) de ladite ou desdites couches (20) comprise entre 10 et 50 microns.

15. Procédé selon l'une des revendications précédentes, **caractérisé en ce qu'**on structure au moins une couche (20) particulière parmi celle ou celles recouvrant ledit corps de base (16), et au moins une dite surface intermédiaire (7), de façon à cacher ou à révéler ladite couche (20) particulière, selon l'angle d'incidence optique d'observation dudit composant (1) par un utilisateur.

16. Procédé selon l'une des revendications précédentes, **caractérisé en ce qu'**on choisit ledit composant d'horlogerie (1) parmi glace, couronne, carrure, platine, pont, roue, roue d'échappement, ancre, logement de palier, amortisseur anti-choc.

## Patentansprüche

1. Verfahren für die Herstellung und die mechanische und/oder optische Funktionalisierung einer optisch durchlässigen Uhrenkomponente (1), umfassend eine obere Oberfläche (2) und eine untere Oberfläche (3), die durch einen Rand (4) verbunden sind, wobei sich der Rand (4) in Dickenrichtung der Komponente (1) erstreckt, **gekennzeichnet dadurch, dass**:
- ein erstes Materials (5), das ein optisch durchlässiges Material ist und das ein Acrylpolymer oder ein Methyl-Polymethacrylat ist, gewählt wird;
- mindestens ein zweites polymerisierbares Gießmaterial (6) für die Herstellung mindestens einer Schicht (20) der Komponente (1) gewählt wird,
in einem Zusammensetzungstyp (CT), bei dem das zweite Material (6) im Verhältnis zur Gesamtmenge enthält:
- Trimetylolpropan-Tri(methacrylat): 78,0 %
- Pentaerythrityl-Tetraacrylat: 19,5%
- bis(4-tert-butylcyclohexyl)peroxydicarbonat: 0,5 %
- 1-Benzoylcyclohexanol: 2,0 %
- eine Formung eines Grundkörpers (16) der Komponente (1) aus dem ersten Material (5) durchgeführt wird, wobei der Grundkörper (16) ein Volumen hat, das kleiner als jenes der Komponente (1) ist und sich zwischen der unteren Oberfläche (3) und einer Zwischenoberfläche (7), die durch einen Zwischenrand (8) verbunden sind, erstreckt, und eine Strukturierung für mechanische und/oder optische Funktionalisierung der Zwischenoberfläche (7) entweder bei der Formung des Grundkörpers (16) in einer angepassten Form oder bei Wiederaufnahme der Bearbeitung nach der Formung durchgeführt wird;
- eine Anzahl von Schichten (20), die dem Grundkörper (16) zu überlagern sind, um eine Komponente (1) zu erhalten, definiert wird;
- für jede Schicht (20) eine Form (9) hergestellt wird, deren Kontaktoberfläche (10) entweder das Negativ der oberen Oberfläche (2) oder eine Oberfläche ist, die einen Festkörper mit einem Volumen begrenzt, das kleiner als das Endvolumen der Komponente (1) ist, wobei die Form (9) einen Rand (11) besitzt, der eine Abstützoberfläche (12) aufweist, die dafür ausgelegt ist, auf komplementäre Weise mit der Zwischenoberfläche (7) oder mit dem Zwischenrand (8) abstützend zusammenzuwirken, wobei diese im Fall einer Mehrzahl von Formen (9) jeweils das äußere Volumen eines Zwischenkörpers (6A) definieren, der durch eine Zwischenoberfläche (7A) begrenzt ist, die zu der Kontaktoberfläche (10) der betreffenden Form (9) komplementär ist, wobei die Zwischenvolumina (6A) ineinander enthalten sind;
- die Form (9) in einem Abstand von der Zwischenoberfläche (7) positioniert wird, der der geforderten Dicke für die Komponente (1) entspricht, und exakt positioniert in Bezug auf die Zwischenoberfläche (7), wobei ihre Kontaktoberfläche (10) der Zwischenoberfläche (7) des Grundkörpers (16) zugewandt ist, wobei die Abstützoberfläche (12) in dichtem Kontakt mit der Zwischenoberfläche (7) oder mit dem Zwischenrand (8) ist;
- das zweite Gießmaterial (6) in einer Weise eingespritzt wird, dass ein Hohlraum (14), der begrenzt ist durch die Kontaktoberfläche (10) der Form (9), die Zwischenoberfläche (7) des Grundkörpers (16) und der Rand (11), der sich über die Abstützoberfläche (12) auf der Zwischenoberfläche (7) oder auf dem Zwischenrand (8) dicht abstützt, vollständig mit dem zweiten Gießmaterial (6) gefüllt wird;
- das in den Hohlraum (14) eingespritzte zweite Material (6) polymerisieren gelassen wird bis zu seiner Polymerisation, um je nach Fall entweder eine Komponente (1), die durch die Zusammenfügung des Grundkörpers (16) und mindestens einer Schicht (20) gebildet ist, oder einen Zwischenkörper (16A), der durch eine Zwischenoberfläche (7A) begrenzt ist, die zu der Kontaktoberfläche (10) der Form (9) komplementär ist, zu erhalten;
- die Form (9) entfernt wird;
- der Vorgang des Bildens einer Schicht (20) jedes Mal mit einer neuen Form (9), deren Innenvolumen größer als das Volumen des durch die vorhergehende Form erhaltenen Zwischenkörpers (16A) ist, erneut durchgeführt wird, bis die Komponente (1) ihr Endvolumen erreicht hat,
und **dadurch gekennzeichnet, dass** eine Strukturierung für die optische Funktionalisierung der Zwischenoberfläche (7) ausgebildet wird durch Ausbilden von geriffelten Bereichen, die einen optischen anisotropen Diffusor bilden.

2. Verfahren nach Anspruch 1, **dadurch gekennzeichnet, dass** als erstes Material (5) ein Methyl-Polymethacrylat gewählt wird.

3. Verfahren nach einem der vorhergehenden Ansprüche, **dadurch gekennzeichnet, dass** das zweite Material (6), das in den Hohlraum (14) eingespritzt wird, während seiner Polymerisation für 10 bis 20 Sekunden einer Temperatur im Bereich von 100 °C bis 120 °C ausgesetzt wird.

4. Verfahren nach einem der vorhergehenden Ansprüche, **dadurch gekennzeichnet, dass** nach dem Einspritzen des zweiten Gießmaterials (6) der Zwischenkörper (6A) oder die Komponente (1) mit Ultraviolettstrahlung bestrahlt wird entweder durch die Form (9), die als für Ultraviolettstrahlen durchlässige Form ausgebildet ist, oder nach der Entnahme des polymerisierten Zwischenkörpers (6A) oder der polymerisierten Komponente (1) aus dem Hohlraum (14), um eine verbesserte Härte des starren Zwischenkörpers (16A) oder der starren Komponente (1) zu erhalten.

5. Verfahren nach dem vorhergehenden Anspruch, **dadurch gekennzeichnet, dass** das erste Gießmaterial (5) durchlässig für Ultraviolettstrahlen gewählt wird und dass der Zwischenkörper (6A) oder die Komponente (1) zusätzlich zu einer Bestrahlung durch eine durchlässige Form (9) mit Ultraviolettstrahlung durch den Grundkörper (16) bestrahlt wird, um eine verbesserte Härte des starren Zwischenkörpers (16A) oder der starren Komponente (1) zu erhalten.

6. Verfahren nach einem der vorhergehenden Ansprüche, **dadurch gekennzeichnet, dass** auf die Form (9) und auf den Grundkörper (16) während der Einspritzung des zweiten Gießmaterials (6) in den Hohlraum (14) und während der Polymerisation des zweiten Gießmaterials (6) für die Herstellung der Komponente (1) ein Anpressdruck ausgeübt wird.

7. Verfahren nach einem der vorhergehenden Ansprüche, **dadurch gekennzeichnet, dass** die Komponente (1) mit der ebenen oberen Oberfläche (2) ausgebildet wird und dass die für Ultraviolettstrahlung durchlässige Form (9) zumindest mit ihrer ebenen Kontaktoberfläche (10) ausgebildet gewählt wird.

8. Verfahren nach einem der vorhergehenden Ansprüche, **dadurch gekennzeichnet, dass** in mindestens einer Form (9) ein Einspritzungs- und Entgasungskapillarnetz (13) ausgebildet ist und dass das zweite Gießmaterial (6) durch das Einspritzungskapillarnetz (13) in die betreffende Form eingespritzt wird, derart, dass ein Hohlraum (14), der begrenzt ist durch die Kontaktoberfläche (10) der Form (9), die Zwischenoberfläche (7) des Grundkörpers (16) und den Rand (11), der sich über ihre Abstützoberfläche (12) auf der Zwischenoberfläche (7) oder auf dem Zwischenrand (8) dicht abstützt, vollständig mit dem zweiten Gießmaterial (6) gefüllt wird.

9. Verfahren nach einem der vorhergehenden Ansprüche, **dadurch gekennzeichnet, dass** das Einspritzen des ersten Gießmaterials (5) mit einem Druck von mehr als 100 MPa erfolgt.

10. Verfahren nach einem der vorhergehenden Ansprüche, **dadurch gekennzeichnet, dass** eine Strukturierung für die mechanische Funktionalisierung der Zwischenoberfläche (7) durchgeführt wird durch die Ausbildung von Zapfen (18) und/oder von Zapfenlöchern (70), die im Wesentlichen zueinander parallel und im Wesentlichen zu einer Ebene senkrecht sind, die an die untere Oberfläche (3) oder an die Zwischenoberfläche (7) auf Höhe des Schnittes zwischen der Verlängerung der Zapfen oder Zapfenlöcher und der betreffenden Oberfläche tangential ist.

11. Verfahren nach einem der vorhergehenden Ansprüche, **dadurch gekennzeichnet, dass** eine Strukturierung für die mechanische Funktionalisierung der Zwischenoberfläche (7) durch die Ausbildung von Querschnitten des Grundkörpers (16), die in seinen Bereichen mit starker Krümmung dünner sind als in seinen Bereichen mit geringerer Krümmung, durchgeführt wird und dass Querschnitte von Eintragschichten (20) mit Querschnitten, die in ihren Bereichen mit starker Krümmung höher sind als in ihren Bereichen mit geringerer Krümmung, ausgebildet werden.

12. Verfahren nach einem der vorhergehenden Ansprüche, **dadurch gekennzeichnet, dass** eine Strukturierung für die mechanische Funktionalisierung der Zwischenoberfläche (7) durch Ausbildung von Bereichen mit veränderlicher Dicke der Komponente (1) in ihren Bereichen mit geringerer Krümmung durchgeführt wird.

13. Verfahren nach einem der vorhergehenden Ansprüche, **dadurch gekennzeichnet, dass** eine Strukturierung für die mechanische Funktionalisierung mindestens einer Zwischenoberfläche (7) durchgeführt wird, um ein Relief mit Höhlungen mit einer Abmessung in der Nähe der Korngröße elektrischer oder elektrisierbarer Teilchen und/oder magnetischer oder magnetisierbarer Teilchen auszubilden, die gemischt mit dem zweiten Material (6) im flüssigen Zustand vor der Aufbringung einer oberen Schicht aus dem zweiten Material (6) abgelagert werden.

14. Verfahren nach einem der vorhergehenden Ansprüche, **dadurch gekennzeichnet, dass** der Grundkörper (16), um die Komponente (1) zu erhalten, mit einer kumulierten Dicke des zweiten Materials (6) der einen oder der mehreren Schichten (20) abgedeckt wird, die im Bereich von 10 bis 50 Mikrometer liegt.

15. Verfahren nach einem der vorhergehenden Ansprüche, **dadurch gekennzeichnet, dass** mindestens eine bestimmte Schicht (20) unter der oder denen, die den Grundkörper (16) bedecken, und mindestens eine Zwischenoberfläche (7) in einer Weise strukturiert werden, dass die bestimmte Schicht (20) je nach dem optischen Einfallswinkel für die Betrachtung der Komponente (1) durch einen Benutzer verborgen oder sichtbar wird.

16. Verfahren nach einem der vorhergehenden Ansprüche, **dadurch gekennzeichnet, dass** die Uhrenkomponente gewählt ist aus Uhrenglas, Krone, Gehäusemittelteil, Platine, Brücke, Rad, Hemmungsrad, Anker, Lageraufnahme, Stoßdämpfer.

## Claims

1. Method for the fabrication and mechanical and/or optical functionalization of an optically transparent timepiece component (1) including a top surface (2) and a bottom surface (3) connected by an edge (4), said edge (4) extending in the thickness of said component (1), **characterized in that**:
- a first material (5) is chosen which is an optically transparent material and which is an acrylic polymer, or a methyl polymethacrylate;
- at least a second polymerisable moulding material (6) is chosen for making at least one layer (20) of said component (1), in a model composition (CT) wherein said second material (6) includes, as a proportion of the total:
- trimethylolpropane tri (methacrylate): 78.0 %
- pentaerythrityl tetraacrylate: 19.5%
- bis (4-tert-butylcyclohexyl) peroxydicarbonate: 0.5%
- 1-benzoylcyclohexanol: 2.0%;
- a basic body (16) of said component (1) is shaped, in said first material (5), said basic body (16) being of smaller volume than that of said component (1) and extending between said bottom surface (3) and an intermediate surface (7) connected by an intermediate edge (8), and mechanical and/or optical functionalization structuring of said intermediate surface (7) is performed, either during the shaping of said basic body (16) in a suitable mould, or during re-machining after said shaping;
- a number of layers (20) to be superposed on said basic body (16) to obtain a said component (1) is defined;
- for each said layer (20), a mould (9) is made having a contact surface (10) which is either the negative of said top surface (2), or a surface delimiting a solid of smaller internal volume than the final volume of said component (1), said mould (9) including an edge (11) having a bearing surface (12) arranged to cooperate in a complementary manner in abutment on said intermediate surface (7) or on said intermediate edge (8), and, in the case of a plurality of said moulds (9), the latter each define the external volume of an intermediate body (6A) delimited by a complementary intermediate surface (7A) of said contact surface (10) of said mould (9) concerned, said intermediate volumes (6A) being incorporated in each other;
- at a distance from said intermediate surface (7) corresponding to the thickness required for said component (1), and exactly positioned in relation to said intermediate surface (7), said mould (9) is positioned with its said contact surface (10) facing said intermediate surface (7) of said basic body (16), with said bearing surface (12) in sealed contact with said intermediate surface (7) or with said intermediate edge (8);
- said second moulding material (6) is injected, so as to completely fill with said second moulding material (6) a cavity (14) delimited by said contact surface (10) of said mould (9), said intermediate surface (7) of said basic body (16), and said edge (11) in sealed abutment via its said bearing surface (12) on said intermediate surface (7) or on said intermediate edge (8);
- said second material (6) injected into said cavity (14) is left to polymerise until polymerisation, to obtain, depending on the case, either a said component (1) formed by assembling said basic body (16) with at least said layer (20), or an intermediate body (16A) delimited by a complementary intermediate surface (7A) of said contact surface (10) of said mould (9);
- said mould (9) is removed;
- the layer (20) forming operation is repeated every time with a new mould (9) whose internal volume is greater than the volume of said intermediate body (16A) obtained from said preceding mould, until said component (1) with its final volume is obtained,
and **characterized in that** optical functionalization structuring is performed on said intermediate surface (7) by forming striated sectors forming an anisotropic optical diffuser.

2. Method according to claim 1, **characterized in that** a methyl polymethacrylate is chosen as said first material (5).

3. Method according to any of the preceding claims, **characterized in that** said second material (6), injected into said cavity (14), is subjected during polymerisation to a temperature comprised between 100°C and 120°C for 10 to 20 seconds.

4. Method according to any of the preceding claims, **characterized in that**, after the injection of said second moulding material (6), said intermediate body (6A) or said component (1) is irradiated by ultraviolet radiation, either through said mould (9) made in the form of a mould transparent to ultraviolet radiation, or after the removal of said intermediate body (6A) or of said polymerised component (1) from said cavity (14), to obtain improved hardness of said intermediate body (16A) or of said rigid component (1).

5. Method according to the preceding claim, **characterized in that** said first moulding material (5) is chosen to be transparent to ultraviolet radiation, and said intermediate body (6A) or said component (1) is irradiated by ultraviolet radiation through said basic body (16), in addition to said irradiation through a said transparent mould (9), to obtain improved hardness of said intermediate body (16A) or of said rigid component (1).

6. Method according to any of the preceding claims, **characterized in that** a tightening force is applied to said mould (9) and to said basic body (16) during the injection of said second moulding material (6) into said cavity (14) and during polymerisation of said second moulding material (6) to produce said component (1).

7. Method according to any of the preceding claims, **characterized in that** said component (1) is made with said top surface (2) plane, and **in that** said mould (9) is selected to be transparent to ultraviolet radiation with at least its said contact surface (10) plane.

8. Method according to any of the preceding claims, **characterized in that** there is made in at least one said mould (9) an injection and degassing capillary network (13), and said second moulding material (6) is injected through said injection capillary network (13) into said mould (9) concerned, so as to completely fill with said second moulding material (6) a cavity (14) delimited by said contact surface (10) of said transparent mould (9), said intermediate surface (7) of said basic body (16), and said edge (11) in sealed abutment via said its bearing surface (12) on said intermediate surface (7) or on said intermediate edge (8).

9. Method according to any of the preceding claims, **characterized in that** the injection of said first moulding material (5) is performed at a pressure of more than 100 MPa.

10. Method according to any of the preceding claims, **characterized in that** mechanical functionalization structuring is performed on said intermediate surface (7) by forming mortises (70) and/or tenons (18) substantially parallel to each other and substantially perpendicular to a plane tangent to said bottom surface (3) or to said intermediate surface (7) on the intersection between the extension of said mortises and tenons and the surface concerned.

11. Method according to any of the preceding claims, **characterized in that** mechanical functionalization structuring is performed on said intermediate surface (7) by forming smaller sections of said basic body (16) in its areas of strong curvature than in its areas of lower curvature, and sections of the added layers (20) are made with larger sections in the areas of strong curvature than in the areas of lower curvature.

12. Method according to any of the preceding claims, **characterized in that** mechanical functionalization structuring is performed on said intermediate surface (7) by forming areas of variable thickness of said component (1) in its areas of lower curvature.

13. Method according to any of the preceding claims, **characterized in that** mechanical functionalization structuring is performed on at least one said intermediate surface (7) to arrange a relief pattern with hollows of dimensions close to the particle size of electrically charged or electrically chargeable and/or magnetically charged or magnetically chargeable particles, which are deposited mixed with said second material (6) in the liquid state, prior to application of a top layer of said second material (6).

14. Method according to any of the preceding claims, **characterized in that** said basic body (16) is coated to produce a said component (1) with a combined second material (6) thickness of said layer or layers (20) comprised between 10 and 50 microns.

15. Method according to any of the preceding claims, **characterized in that** at least one particular layer (20) of the layer or layers covering said basic body (16) is structured, and at least one said intermediate surface (7), so as to conceal or reveal said particular layer (20), according to the angle of incidence and optical observation of said component (1) by a user.

16. Method according to any of the preceding claims, **characterized in that** said timepiece component (1) is selected from the following: crystal, crown, case middle, plate, bridge, wheel, escape wheel, pallets, bearing housing, shock absorber.
